(19) Europäisches Patentamt
European Patent Office
Office européen des brevets

(11) **EP 2 388 163 A2**

(12) **EUROPEAN PATENT APPLICATION**

(43) Date of publication:
**23.11.2011 Bulletin 2011/47**

(51) Int Cl.:
**B60Q 1/14** (2006.01)

(21) Application number: **11164761.6**

(22) Date of filing: **04.05.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.05.2010 JP 2010116244**

(71) Applicant: **Koito Manufacturing Co., Ltd. Tokyo 108-8711 (JP)**

(72) Inventor: **Hayakawa, Michihiko Shimizu-shi Shizuoka (JP)**

(74) Representative: **Grünecker, Kinkeldey, Stockmair & Schwanhäusser Leopoldstrasse 4 80802 München (DE)**

(54) **Vehicle headlamp system, control device, and vehicle headlamp**

(57)     There is provided a lamp system for a vehile (400). The lamp system includes: a vehicle lamp (210) configured to form a first light distribution pattern (Hi2, Hi3) and move the first light distribution pattern in a vehicle width direction, wherein the first light distribution pattern is formed by combining: a low beam light distribution pattern having a cutoff line; and a certain light distribution pattern formed above the cutoff line; a vehicle sensor (306, 308, 302) configured to detect a front vehicle (420) and acquire position information of the front vehicle; and a controller (302) configured to move the certain light distribution pattern in the vehicle width direction such that the certain light distribution pattern moves away from the front vehicle (420), based on the position information. The controller is configured to determine the upper limit of a moving range of the certain light distribution pattern, based on a speed of the vehicle (400).

FIG. 1

EP 2 388 163 A2

**Description**

BACKGROUND

Technical Field

The present disclosure relates to a vehicle lamp system, a control device, and a vehicle lamp, and more particularly, to a vehicle lamp system, a control device, and a vehicle lamp that are used in an automobile and the like.

Related Art

A vehicle lamp system used in a vehicle headlight generally can switch between a low beam and a high beam. A low beam illuminates the vicinity of a subject vehicle at a predetermined illuminance so as not to direct glare at front vehicles, which include oncoming vehicles and preceding vehicles, and is mainly used when the subject vehicle travels in an urban area. Meanwhile, a high beam illuminates a wide range and a distance on the front side of a subject vehicle at a relatively high illuminance, and is mainly used when the subject vehicle travels at a high speed on a road where few front vehicles travel.

A high beam is superior to a low beam in terms of a driver's visibility, but has a problem in that glare is directed at the drivers of other vehicles. Accordingly, particularly when a vehicle travels in an urban area at night, a low beam is more often used. When a low beam is used, a light source for a high beam is not used. Meanwhile, there has always been a demand for improvement of a driver's visibility on a road when a low beam is used.

In contrast, a vehicle headlight device is disclosed in JP-A-2010-000957 (the counterpart EP publication EP2135774). The vehicle headlight device includes lamps. The lamps can irradiate a left additional light distribution pattern that includes a region formed on the left side of a vertical line above a cutoff line of a low beam light distribution pattern, and a right additional light distribution pattern that includes a region formed on the right side of the vertical line. The vehicle headlight device controls the lamps so that the lamps irradiate the left additional light distribution pattern or the right additional light distribution pattern according to the position of a vehicle.

For example, it is considered that the following control is performed to prevent glare from being directed at a front vehicle and to improve a driver's visibility at the same time. That is, at least one of the above-mentioned left and right additional light distribution patterns is formed, and a non-irradiation region of the formed additional light distribution pattern, which is positioned above the cutoff line of the low beam light distribution pattern, overlaps the position of a front vehicle. Further, an irradiation region of the additional light distribution pattern is moved in a vehicle width direction so as to correspond to the moving front vehicle.

In the above-mentioned control, an image of the front side of a subject vehicle is taken by, for example, a camera as a vehicle detecting device, and frame data of the obtained image are subjected to predetermined image processing, so that the front vehicle is detected. Further, the position information of the front vehicle is sent to the lamp and the lamp swivels based on the position information, so that the additional light distribution pattern is moved so as to correspond to the front vehicle. When the swivel angle of the lamp, that is, the moving distance of the additional light distribution pattern reaches the mechanical limit, the illuminance of the additional light distribution pattern is reduced and the lamp returns to an initial position. In this control, there was room for improvement in terms of the prevention of glare directed at the front vehicle and the improvement of a driver's visibility at the same time.

SUMMARY OF THE INVENTION

It is an illustrative object of the present invention to provide a technique that can more reliably prevent glare directed at the front vehicle and more reliably improve the driver's visibility at the same time.

According to one or more illustrative aspects of the present invention, there is provided a lamp system for a vehile. The system comprises: a vehicle lamp configured to form a first light distribution pattern and move the first light distribution pattern in a vehicle width direction, wherein the first light distribution pattern is formed by combining: a low beam light distribution pattern having a cutoff line; and a certain light distribution pattern formed above the cutoff line; a vehicle sensor configured to detect a front vehicle and acquire position information of the front vehicle; and a controller configured to move the certain light distribution pattern in the vehicle width direction such that the certain light distribution pattern moves away from the front vehicle, based on the position information. The controller is configured to determine the upper limit of a moving range of the certain light distribution pattern, based on a speed of the vehicle.

Other aspects, features and advantages of the present invention will be apparent from the following description, the drawings and the claims.

BRIEF DESCRIPTION OF THE DRAWINGS

Fig. 1 is a schematic vertical cross-sectional view illustrating the internal structure of a vehicle lamp system according to a first embodiment;

Fig. 2 is a schematic perspective view of a rotary shade;

Fig. 3 is a functional block diagram illustrating an operational interaction between an irradiation controller of a headlight unit and a vehicle controller provided in a vehicle;

Figs. 4A to 4F are views showing the shape of light distribution patterns;

Fig. 5 is a schematic view illustrating the control of the formation of a light distribution pattern that is performed by the vehicle lamp system according to the first embodiment; and

Fig. 6 is a schematic view illustrating the control of the formation of a light distribution pattern that is performed by a vehicle lamp system according to a second embodiment.

DETAILED DESCRIPTION OF EXEMPLARY EMBODIMENTS

Preferred embodiments of the invention will be described below with reference to the drawings. The same or equivalent components, members, and processes, which are shown in the respective drawings, are denoted by the same reference numerals, and repeated description will be appropriately omitted. Further, embodiments do not limit the invention, and are illustrative. The characteristics or combinations described in the embodiments are not all necessarily essential to the invention.

(First embodiment)

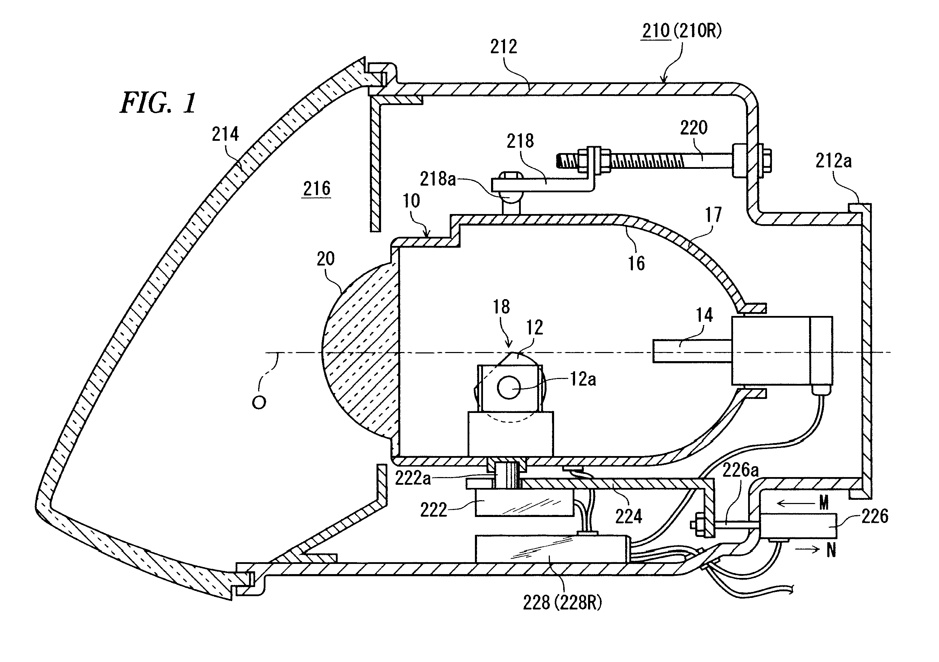

Fig. 1 is a schematic vertical cross-sectional view illustrating the internal structure of a vehicle lamp system according to a first embodiment. The vehicle lamp system 200 according to this embodiment is an adaptive front-lighting system where a pair of symmetrical headlight units is disposed at both left and right portions of a vehicle in a vehicle width direction. The headlight units, which are disposed at the right and left portions of the vehicle, have substantially the same structure except for the symmetrical structure. Accordingly, the structure of a right headlight unit 210R will be described below, and the description of a left headlight unit will be appropriately omitted. For convenience of description, the respective members of the left headlight unit are denoted by the same reference numerals as those of the members of the headlight unit 210R that correspond to the members of the left headlight unit.

The headlight unit 210R includes a lamp body 212 and a translucent cover 214. The lamp body 212 includes an opening that is formed on the front side of a vehicle, and a translucent cover 214 that covers the opening. The lamp body 212 includes a detachable cover 212a that is provided on the rear side of the vehicle and can be detached when a bulb 14 is replaced. A lamp chamber 216 is formed by the lamp body 212 and the translucent cover 214. A lamp unit 10 (vehicle lamp), which irradiates light to the front side of the vehicle, is received in the lamp chamber 216.

A lamp bracket 218, which includes a pivot mechanism 218a serving as the swiveling center of the lamp unit 10 in vertical and horizontal directions, is formed at a part of the lamp unit 10. The lamp bracket 218 is threadably engaged with aiming adjustment screws 220 that are rotatably supported by the wall surface of the lamp body 212. Accordingly, the lamp unit 10 is fixed at a predetermined position in the lamp chamber 216 that is set according to the adjustment states of the aiming adjustment screws 220, and may swivel about the pivot mechanism 218a so that the posture of the lamp unit is changed to a forward inclined posture or a backward inclined posture.

Further, a rotating shaft 222a of a swivel actuator 222 (that forms an adaptive front-lighting system (AFS) or the like for a curved road, which illuminates in the traveling direction while a vehicle travels on a curved road) is fixed to the lower surface of the lamp unit 10. The swivel actuator 222 makes the lamp unit 10 swivel about the pivot mechanism 218a in the traveling direction based on the steering angle data provided from the vehicle, the shape data of a traveling road provided from a navigation system, and a relative positional relationship between a subject vehicle and front vehicles including oncoming vehicles and preceding vehicles, and the like. As a result, the irradiation region of the lamp unit 10 faces not the front side of the vehicle but the front side on the curved road, so that driver's forward visibility is improved. The swivel actuator 222 may be formed of, for example, a stepping motor. Meanwhile, if a swivel angle has a fixed value, a solenoid or the like may also be used as the swivel actuator.

The swivel actuator 222 is fixed to a unit bracket 224. A leveling actuator 226, which is disposed outside the lamp body 212, is connected to the unit bracket 224. The leveling actuator 226 is formed of, for example, a motor or the like that pushes and pulls a rod 226a in directions of arrows M and N. If the rod 226a is pushed in the direction of the arrow M, the lamp unit 10 swivels about the pivot mechanism 218a so as to be in the backward inclined posture. In contrast, if the rod 226a is pulled in the direction of the arrow N, the lamp unit 10 swivels about the pivot mechanism 218a so as to be in the forward inclined posture. When the lamp unit 10 is in the backward inclined posture, it may be possible to perform leveling adjustment that makes an optical axis O be directed to the upper side. Further, when the lamp unit 10 is in the forward inclined posture, it may be possible to perform leveling adjustment for that makes the optical axis O be directed to the lower side. As described above, it may be possible to adjust the optical axis according to the posture of the vehicle by performing the leveling adjustment. As a result, it may be possible to adjust the range of light, which is irradiated forward from the vehicle lamp system 200, to an optimal distance.

Meanwhile, the leveling adjustment may also be performed according to the posture of a vehicle that is traveling. For example, if a vehicle accelerates while traveling, the posture of the vehicle becomes the backward inclined posture. In contrast, if a vehicle decelerates while traveling, the posture of the vehicle becomes the forward inclined posture. Accordingly, the irradiation direction of the vehicle lamp system 200 also changes in a vertical direction according to the posture of the vehicle, and forward irradiation distance increases or decreases. Further, it may be possible to optimally adjust the range of the forward irradiation even during the travel of a vehicle by performing the leveling adjustment of the lamp unit 10 in real time based on the posture of a vehicle. This may be referred to as "automatic leveling".

An irradiation controller 228, which controls the turning-on/off of the lamp unit 10 or controls the formation of a light distribution pattern, is disposed on the inner wall surface of the lamp chamber 216 below the lamp unit 10. In the case of Fig. 1, an irradiation controller 228R for controlling the headlight unit 210R is disposed. The irradiation controller 228R also controls the swivel actuator 222, the leveling actuator 226, and the like.

The lamp unit 10 may include an aiming adjustment mechanism. For example, an aiming pivot mechanism (not shown), which functions as a swiveling center during aiming adjustment, is disposed at a connection portion between the unit bracket 224 and the rod 226a of the leveling actuator 226. Further, the above-mentioned aiming adjustment screws 220 are disposed at the lamp bracket 218 with a gap therebetween. For example, when the two aiming adjustment screws 220 are rotated in a counterclockwise direction, the lamp unit 10 swivels about the aiming pivot mechanism so as to be in the forward inclined posture. Accordingly, an optical axis is adjusted so as to be directed to the lower side. Likewise, when the two aiming adjustment screws 220 are rotated in a clockwise direction, the lamp unit 10 swivels about the aiming pivot mechanism so as to be in the backward inclined posture. Accordingly, an optical axis is adjusted so as to be directed to the upper side. Furthermore, when the aiming adjustment screw 220, which is disposed on the left side in the vehicle width direction, is rotated in the counterclockwise direction, the lamp unit 10 swivels about the aiming pivot mechanism so as to be in a right swivel posture. Accordingly, an optical axis is adjusted so as to be directed to the right side. Moreover, when the aiming adjustment screw, which is disposed on the right side in the vehicle width direction, is rotated in the counterclockwise direction, the lamp unit 10 swivels about the aiming pivot mechanism so as to be in a left swivel posture. Accordingly, an optical axis is adjusted so as to be directed to the left side. This aiming adjustment is performed at the time of the shipment of vehicles, the inspection of vehicles, or the replacement of the headlight unit 210R. Further, the headlight unit 210R is adjusted to a posture that is prescribed in design, and the formation of the light distribution pattern of this embodiment is performed based on this posture.

The lamp unit 10 includes a shade mechanism 18 including a rotary shade 12, a bulb 14 as a light source, a lamp housing 17 that supports the reflector 16 the inner wall thereof, and a projection lens 20. For example, an incandescent bulb, a halogen lamp, a discharge bulb, an LED, or the like may be used as the bulb 14. In this embodiment, the bulb 14 formed of a halogen lamp is shown as an example. The reflector 16 reflects light that is emitted from the bulb 14. Further, a part of the light emitted from the bulb 14 and the light reflected by the reflector 16 are guided to the projection lens 20 through the rotary shade 12. Meanwhile, shade plates 24 to be described below are not shown in Fig. 1.

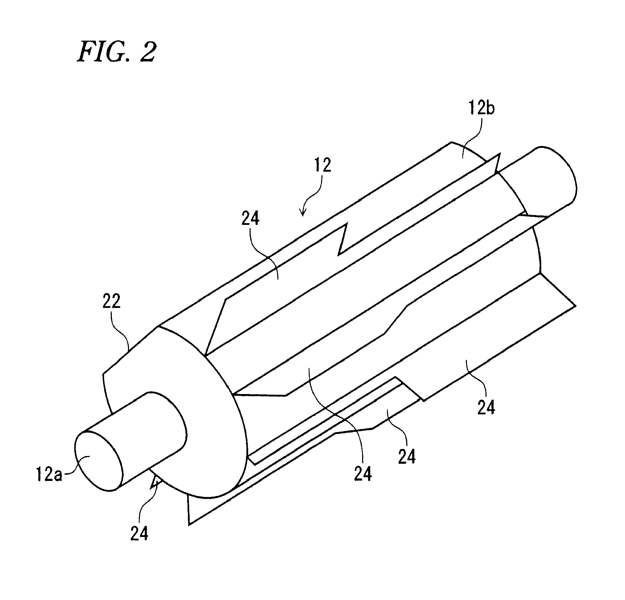

Fig. 2 is a schematic perspective view of the rotary shade. The rotary shade 12 is a cylindrical member that can be rotated about a rotating shaft 12a by a shade rotating motor. Moreover, the rotary shade 12 includes a cutout portion 22 that is formed by cutting a part of the rotary shade in an axial direction, and holds a plurality of plate-like shade plates 24 on the outer peripheral surface 12b thereof except for the cutout portion 22. The rotary shade 12 can move one of the cutout portion 22 and the shade plates 24 to the position of the rear focus of the projection lens 20 on the optical axis O, according to the rotation angle thereof. Accordingly, a light distribution pattern is formed so as to correspond to the shape of an edge portion of the shade plate 24 that is disposed on the optical axis O. For example, when one of shade plates 24 of the rotary shade 12 is moved onto the optical axis O and blocks a part of light emitted from the bulb 14, it may be possible to form a low beam light distribution pattern or a light distribution pattern that partially has the characteristics of a high beam light distribution pattern. Further, when the cutout portion 22 is moved onto the optical axis O and the light emitted from the bulb 14 is not blocked, it may be possible to form a high beam light distribution pattern.

The rotary shade 12 can be rotated by the driving of, for example, a motor. Accordingly, it may be possible to move the shade plate 24 or the cutout portion 22, which forms a desired light distribution pattern, onto the optical axis O by controlling the rotation angle of the motor. Meanwhile, the cutout portion 22 formed on the outer peripheral surface 12b of the rotary shade 12 may be omitted so that the rotary shade 12 has only a function of blocking light. Further, in order to form a high beam light distribution pattern, the rotary shade 12 retreats from the position on the optical axis O by the driving of, for example, a solenoid or the like. Due to this structure, a low beam light distribution pattern or a light distribution pattern similar to the low beam light distribution pattern is fixed even though, for example, a motor rotating the rotary shade 12 fails. That is, it may be possible to achieve a fail-safe function by reliably avoiding that the rotary shade 12 is fixed at a posture where a high beam light distribution pattern is formed.

Returning to Fig. 1, at least a part of the reflector 16 is formed in an ellipsoidal shape, and the ellipsoidal surface of the reflector is set so that the shape of the cross-section of the ellipsoidal surface, which includes the optical axis O of the lamp unit 10, becomes at least a part of an elliptical shape. The ellipsoidal portion of the reflector 16 has a first focus substantially at the center of the bulb 14, and has a second focus on the rear focal plane of the projection lens 20.

The projection lens 20 is disposed on the optical axis O extending in the longitudinal direction of a vehicle. The bulb 14 is disposed on the rear side of a rear focal plane that is a focal plane including the rear focus of the projection lens 20. The projection lens 20 is formed of a piano-convex aspheric lens of which the front surface is a convex surface and the rear surface is a flat surface. The projection lens projects a light source image, which is formed on the rear focal plane, onto a virtual vertical screen, which is formed on the front side of the vehicle lamp system 200, as an inverted image. Meanwhile, the structure of the lamp unit 10 is not particularly limited thereto, and the lamp unit may be a reflective lamp unit or the like that does not include the projection lens 20.

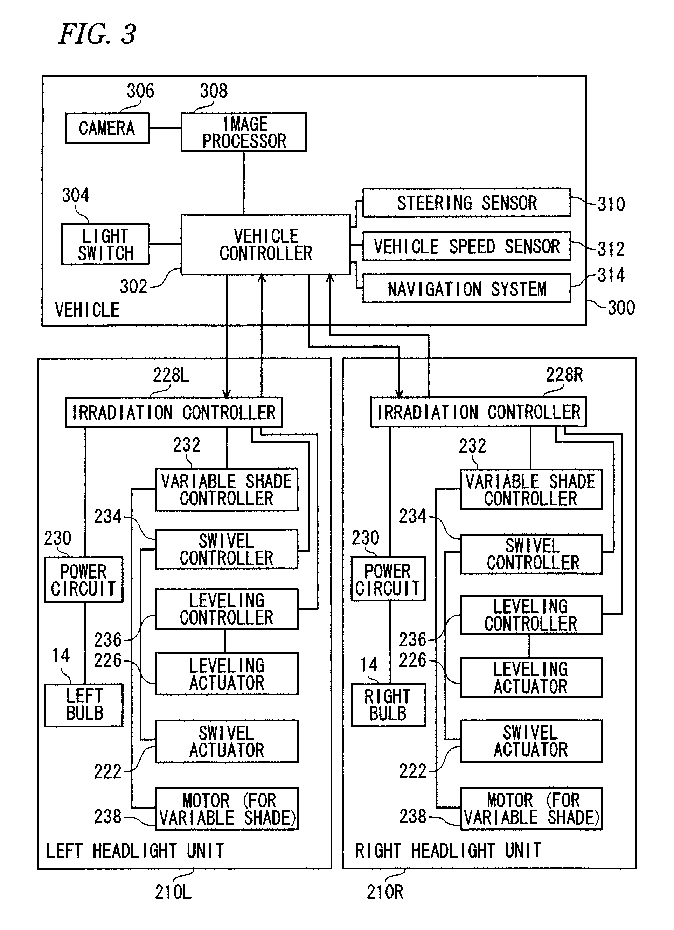

Fig. 3 is a functional block diagram illustrating an operational interaction between the irradiation controller of the headlight unit having the above-mentioned structure and a vehicle controller provided in a vehicle. Meanwhile, since the structure of the right headlight unit 210R is basically the same as that of the left headlight unit 210L as described above, only the right headlight unit 210R will be described and the description of the left headlight unit 210L will be omitted.

The irradiation controller 228R of the headlight unit 210R controls a power circuit 230 based on the information obtained from a vehicle controller 302 mounted on a vehicle 300, and controls the turning-on of the bulb 14. Further, the irradiation controller 228R controls a variable shade controller 232, a swivel controller 234, and a leveling controller 236 based on the information obtained from the vehicle controller 302. The variable shade controller 232 controls the driving of a motor 238, which is connected to the rotating shaft 12a of the rotary shade 12 through a gear mechanism, and moves a desired shade plate 24 or the cutout portion 22 onto the optical axis O. Meanwhile, rotation information, which represents the rotation state of the rotary shade 12 and is provided from a detection sensor such as an encoder provided on the motor 238 or the rotary shade 12, is provided to the variable shade controller 232. Accordingly, it may be possible to achieve accurate rotation control by feedback control.

The swivel controller 234 adjusts the angle of the optical axis O of the lamp unit 10 in the vehicle width direction by controlling the swivel actuator 222. For example, when a vehicle travels on a curved road or turns right or left, the optical axis O of the lamp unit 10 is directed to the traveling direction where the vehicle is to travel. Further, the leveling controller 236 adjusts the optical axis of the lamp unit 10 in the vertical direction of the vehicle by controlling the leveling actuator 226. For example, the leveling controller adjusts the range of light, which is irradiated toward the front side, to an optimal distance by adjusting the posture of the lamp unit 10 according to whether the posture of a vehicle is inclined forward or backward during the acceleration or deceleration. The vehicle controller 302 also provides the same information to the headlight unit 210L, and an irradiation controller 228L, which is provided in the headlight unit 210L, performs the same control as the control of the irradiation controller 228R.

In the case of this embodiment, the light distribution patterns formed by the headlight units 210L and 210R may be switched according to the operation of a lighting switch 304 that is performed by a driver. In this case, each of the irradiation controllers 228L and 228R determines a light distribution pattern, which is to be formed by the lamp unit 10, by controlling the motor 238 through the variable shade controller 232 according to the operation of the lighting switch 304.

The headlight units 210L and 210R of this embodiment detect the circumstances around the vehicle by various sensors and may be automatically controlled without the operation of the lighting switch 304 so as to form light distribution patterns optimal for the state of the vehicle 300 or the circumstances around the vehicle. For example, if it may be possible to detect that preceding vehicles, oncoming vehicles, pedestrians, or the like are present in front of a subject vehicle, the irradiation controllers 228L and 228R determine that glare should be prevented on basis of the information obtained from the vehicle controller 302. Then, the irradiation controllers form low beam light distribution patterns by the lamp units 10. Further, if it may be possible to detect that preceding vehicles, oncoming vehicles, pedestrians, or the like are not present in front of a subject vehicle, the irradiation controllers 228L and 228R determine that driver's visibility should be improved. Then, the irradiation controllers form high beam light distribution patterns where light is not blocked by the rotary shade 12. Furthermore, when special high beam light distribution patterns or special low beam light distribution patterns to be described below may be formed in addition to the low beam light distribution patterns and the high beam light distribution patterns, optimal light distribution patterns optimal considering a front vehicle may be formed according to the presence of a front vehicle. This control mode may be referred to as an ADB (Adaptive Driving Beam) mode.

A camera 306, such as a stereo camera, as means for recognizing an object is connected to the vehicle controller 302 in order to detect objects, such as preceding vehicles or oncoming vehicles. Frame data of an image taken by the camera 306 are subjected to predetermined image processing such as object recognition in an image processor 308, and the results of recognition are provided to the vehicle controller 302. For example, if data, which are previously stored in the vehicle controller 302 and include feature points representing a vehicle, exist in the recognition result data provided from the image processor 308, the vehicle controller 302 recognizes the presence of a vehicle and provides information about the presence of the vehicle to the irradiation controllers 228L and 228R. The irradiation controllers 228L and 228R receive the information about the vehicle from the vehicle controller 302, and form optimal light distribution patterns considering the vehicle. Here, the "feature points representing a vehicle" mean, for example, light spots that have luminance equal to or higher than a predetermined luminance and appear in an estimated region where the headlights, sign lamps such as tail lamps, and the like of a front vehicle are present. Further, for example, if data, which include feature points representing a pedestrian previously stored, exist in the recognition result data provided from the image processor 308, the vehicle controller 302 provides information about the pedestrian to the irradiation controllers 228L and 228R. Then, the irradiation controllers 228L and 228R form optimal light distribution patterns considering the pedestrian. In this embodiment, the camera 306, the image processor 308, and the vehicle controller 302 form a vehicle detecting device.

Furthermore, the vehicle controller 302 may also acquire information from a steering sensor 310, a vehicle speed sensor 312, and the like that are generally mounted on the vehicle 300. Accordingly, the irradiation controllers 228L and 228R may select light distribution patterns that are formed according to the traveling state or the traveling posture of the vehicle 300, or easily change the light distribution patterns by changing the direction of the optical axis O. For example, if the vehicle controller 302 determines that a subject vehicle turns based on the information provided from the steering sensor 310, each of the irradiation controllers 228L and 228R having received information from the subject vehicle controller 302 may select the shade plate 24 that forms a light distribution pattern for increasing the field of view in a turning direction. Moreover, the swivel actuator 222 may be controlled by the swivel controller 234 without the change of the rotation state of the rotary shade 12 so that the optical axis O of the lamp unit 10 is directed to the turning direction for the increase in the field of view. This control mode may be referred to as a turning sensing mode.

Further, when a vehicle travels at a high speed at night, it is preferable to illuminate the front side of the subject vehicle to allow a driver to recognize preceding vehicles or oncoming vehicles approaching from a distance, road signs or message boards, and the like as quickly as possible. Furthermore, if the vehicle controller 302 determines that a subject vehicle travels at a high speed based on the information provided from the vehicle speed sensor 312, each of the irradiation controllers 228L and 228R may select a shade plate 24, which forms a low beam light distribution pattern corresponding to a highway mode where the shape of the low beam light distribution pattern is partially changed. The same control may be achieved by making the lamp unit 10 be in the backward inclined posture through the control of the leveling actuator 226 that is performed by the leveling controller 236. The automatic leveling control, which is performed during the acceleration or deceleration by the above-mentioned leveling actuator 226, is a control that maintains the irradiation distance constant. If the height of a cutoff line is actively controlled by using this control, it may be possible to perform a control similar to the control that selects a different cutoff line by rotating the rotary shade 12. This control mode may be referred to as a speed sensing mode.

Moreover, the vehicle controller 302 may also acquire information provided from an inter-vehicle distance sensor (not shown) that is mounted on the vehicle 300. Accordingly, each of the irradiation controllers 228L and 228R may adjust the height of a cutoff line of a light distribution pattern according to a distance (inter-vehicle distance) between a front vehicle and a subject vehicle. For example, if the vehicle controller 302 determines that a front vehicle is relatively distant from a subject vehicle based on the information provided from the inter-vehicle distance sensor, each of the irradiation controllers 228L and 228R changes the posture of the lamp unit 10 to the backward inclined posture through the control of the leveling actuator 226 that is performed by the leveling controller 236. Accordingly, the cutoff line of a low beam light distribution pattern is slightly moved upward, so that it may be possible to improve driver's visibility while preventing glare from being directed at the front vehicle. The light distribution pattern, which is formed by this control, may be referred to as a dynamic cutoff line light distribution pattern.

Meanwhile, the adjustment of the optical axis of the lamp unit 10 may be performed without using the swivel actuator 222 or the leveling actuator 226. For example, the lamp unit 10 may swivel through real-time aiming control, or visibility in a desired direction may be improved by making the lamp unit be in a forward inclined posture or a backward inclined posture.

In addition, the vehicle controller 302 may also acquire information about the shape or form of a road, information about the installation of road signs, and the like from a navigation system 314. Since acquiring these kinds of information in advance, each of the irradiation controllers 228L and 228R may smoothly form a light distribution pattern suitable for a traveling road by controlling the leveling actuator 226, the swivel actuator 222, the motor 238, and the like. This control mode may be referred to as a navigation sensing mode. When automatic formation control automatically forming light distribution patterns, which includes the above-mentioned various control modes, is instructed by, for example, the lighting switch 304, the automatic formation control is performed.

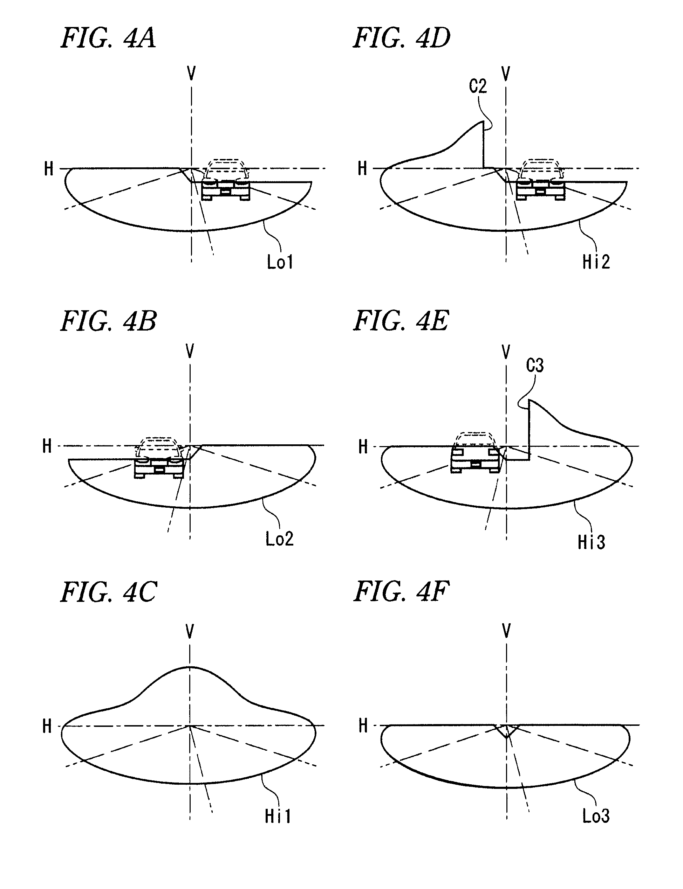

Next, the light distribution patterns, which may be formed by the lamp unit 10 of each of the headlight units 210L and 210R, will be described. Figs. 4A to 4F are views showing the shape of the light distribution patterns. Meanwhile, Figs. 4A to 4F show light distribution patterns formed on a virtual vertical screen that is disposed at a predetermined position on the front side of the lamp, for example, at a position 25 m ahead of the lamp.

As described above, the headlight units 210L and 210R have substantially the same structure. Accordingly, the headlight units 210L and 210R can form the same light distribution pattern. Further, since the projection lens 20 is a plano-convex aspheric lens of which the front surface is a convex surface and the rear surface is a flat surface as shown in Fig. 1, each of the light distribution patterns except for a high beam light distribution pattern becomes an image that is obtained by vertically and horizontally inverting a light source image that includes a portion where light is blocked by the corresponding shade plate 24. Therefore, the shape of a cutoff line of each light distribution pattern corresponds to the shape of an edge of each shade plate 24.

A light distribution pattern shown in Fig. 4A is a basic low beam light distribution pattern Lo1. The basic low beam light distribution pattern Lo1 is a light distribution pattern that is considered so as not to direct glare at front vehicles or pedestrians when vehicles or pedestrians keep to the left. The basic low beam light distribution pattern Lo1 includes an opposite lane cutoff line that extends parallel to a horizontal line H on the right side of a vertical line V at the upper end of the basic low beam light distribution pattern, a traveling lane cutoff line that extends parallel to the horizontal line H at a position higher than the opposite lane cutoff line on the left side of the vertical line V, and an oblique cutoff line that is formed between the opposite lane cutoff line and the traveling lane cutoff line and connects the opposite lane cutoff line with the traveling lane cutoff line. The oblique cutoff line obliquely extends upward from an intersection, which is formed between the opposite lane cutoff line and the vertical line V, toward the left side at an inclination angle of 45°.

A light distribution pattern shown in Fig. 4B is a Dover low beam light distribution pattern Lo2 that forms a so-called "Dover low beam". The Dover low beam light distribution pattern Lo2 is a light distribution pattern that is considered so as not to direct glare at front vehicles or pedestrians when vehicles or pedestrians keep to the right. The Dover low beam light distribution pattern Lo2 and the basic low beam light distribution pattern Lo1 are substantially symmetrical to each other with respect to a vertical line V.

A light distribution pattern shown in Fig. 4C is a high beam light distribution pattern Hi1. The high beam light distribution pattern Hi1 is a light distribution pattern that illuminates a wide range and a distance on the front side. For example, when glare at front vehicles or pedestrians does not need to be considered, the high beam light distribution pattern is formed. Specifically, the high beam light distribution pattern Hi1 is formed when front vehicles or pedestrians are not present or front vehicles and the like are present in the distance enough not to receive glare even though the high beam light distribution pattern Hi1 is formed.

A light distribution pattern shown in Fig. 4D is a left-side high light distribution pattern Hi2 that forms a so-called "left-side high beam". The left-side high light distribution pattern Hi2 is a special high beam light distribution pattern that irradiates light on a high beam region of only the traveling lane side and blocks light on the opposite lane side of the high beam light distribution pattern Hi1 when vehicles or pedestrians keep to the left. That is, the left-side high light distribution pattern Hi2 is a light distribution pattern that includes an irradiation region (hereinafter, this irradiation region is appropriately referred to as an upper irradiation region) and a non-irradiation region (hereinafter, this irradiation region is appropriately referred to as an upper non-irradiation region) that are lined up in the vehicle width direction above the cutoff line of the basic low beam light distribution pattern Lo1. Specifically, the left-side high light distribution pattern Hi2 is a light distribution pattern that includes the upper irradiation region on the traveling lane side and the upper non-irradiation region on the opposite lane side. It is preferable that the left-side high light distribution pattern Hi2 be used when preceding vehicles or pedestrians are not present on the traveling lane and oncoming vehicles or pedestrians are present on the opposite lane. The left-side high light distribution pattern does not direct glare at oncoming vehicles or pedestrians, and can improve driver's visibility by irradiating a high beam only on the traveling lane side. In this embodiment, the left-side high light distribution pattern Hi2 has a shape where a boundary C2 between the upper irradiation region and the upper non-irradiation region is deviated from the vertical line V toward the traveling lane side by, for example, 2°.

A light distribution pattern shown in Fig. 4E is a right-side high light distribution pattern Hi3 that forms a so-called "left-side high beam". The right-side high light distribution pattern Hi3 is a special high beam light distribution pattern that irradiates light on a high beam region of only the opposite lane side and blocks light on the traveling lane side of the high beam light distribution pattern Hi1 when vehicles or pedestrians keep to the left. That is, the right-side high light distribution pattern Hi3 is a light distribution pattern that includes an irradiation region (hereinafter, this irradiation region is appropriately referred to as an upper irradiation region) and a non-irradiation region (hereinafter, this irradiation region is appropriately referred to as an upper non-irradiation region) that are lined up in the vehicle width direction above the cutoff line of the basic low beam light distribution pattern Lo1. Specifically, the right-side high light distribution pattern Hi3 is a light distribution pattern that includes the upper irradiation region on the opposite lane side and the upper non-irradiation region on the traveling lane side. It is preferable that the right-side high light distribution pattern Hi3 be used when oncoming vehicles or pedestrians are not present on the opposite lane and preceding vehicles or pedestrians are present on the traveling lane. The right-side high light distribution pattern does not direct glare at preceding vehicles or oncoming vehicles or pedestrians, and can improve visibility by irradiating a high beam only on the opposite lane side. In this embodiment, the right-side high light distribution pattern Hi3 has a shape where a boundary C3 between the upper irradiation region and the upper non-irradiation region is deviated from the vertical line V toward the opposite lane side by, for example, 2°.

A light distribution pattern shown in Fig. 4F is a V-beam light distribution pattern Lo3 that forms a so-called "V-beam". Both a traveling lane cutoff line and an opposite lane cutoff line of the V-beam light distribution pattern Lo3 have substantially the same height as the height of a horizontal line H. The V-beam light distribution pattern Lo3 is a special low beam light distribution pattern that has intermediate characteristics between a low beam and a high beam. The V-beam light distribution pattern Lo3 may be formed by superimposing, for example, the basic low beam light distribution pattern Lo1L formed by the headlight unit 210L (for the convenience of the description, reference character "L" is added to the very end of the reference numeral of each light distribution pattern formed by the headlight unit 210L and reference character "R" is added to the very end of the reference numeral of each light distribution pattern formed by the headlight unit 210R. Hereinafter the same) and the Dover low beam light distribution pattern Lo2R formed by the headlight unit 210R.

As described above, the basic low beam light distribution pattern Lo1L includes an oblique cutoff line. The Dover low beam light distribution pattern Lo2R and the basic low beam light distribution pattern Lo1L are symmetrical to each other with respect to the vertical line V. For this reason, the V-beam light distribution pattern Lo3 include a substantially V-shaped light blocking region, which is formed by two oblique cutoff lines in the middle thereof below the horizontal line H. Further, since the basic low beam light distribution pattern Lo1L and the Dover low beam light distribution pattern Lo2R are superimposed, an opposite lane-side irradiation region of the V-beam light distribution pattern Lo3 is moved upward from the opposite lane-side irradiation region of the basic low beam light distribution pattern Lo1. Meanwhile, a traveling lane-side irradiation region of the V-beam light distribution pattern is moved upward from the traveling lane-side irradiation region of the Dover low beam light distribution pattern Lo2. Accordingly, the V-beam light distribution pattern Lo3 becomes a light distribution pattern that can further improve driver's visibility as compared to basic low beam light distribution pattern Lo1 and the Dover low beam light distribution pattern Lo2. The V-beam light distribution pattern Lo3 does not direct glare at front vehicles or pedestrians that are relatively distant from a subject vehicle, and can improve a driver's visibility by irradiating light up to substantially the same height as the horizontal line.

The vehicle lamp system 200 according to this embodiment can form a so-called split light distribution pattern in addition to the above-mentioned various light distribution patterns. The split light distribution pattern includes a light blocking region (non-irradiation region) in the middle thereof above the horizontal line H, and is a special high beam light distribution pattern that includes high beam regions on both sides of the light blocking region in the horizontal direction. The split light distribution pattern may be formed by superimposing, for example, the left-side high light distribution pattern Hi2L formed by the headlight unit 210L and the right-side high light distribution pattern Hi3R formed by the headlight unit 210R. In this case, the upper non-irradiation regions of the left-side high light distribution pattern Hi2L and the right-side high light distribution pattern Hi3R are superimposed, so that the light blocking region is formed. The high beam regions positioned on both sides of the light blocking region are formed by the upper irradiation regions of the left-side high light distribution pattern Hi2L and the right-side high light distribution pattern Hi3R. When at least one of the left-side high light distribution pattern Hi2L and the right-side high light distribution pattern Hi3R is moved in the vehicle width direction (the horizontal direction) by making the lamp units 10 of the headlight units 210L and 210R swivel, the range of the light blocking region may be changed in the vehicle width direction.

For example, if the vehicle controller 302 detects the presence of a front vehicle by the information obtained from the camera 306 when the automatic formation control forming light distribution patterns, for example, the ADB mode is instructed by the lighting switch 304, the irradiation controllers 228L and 228R, which have received information from the vehicle controller 302, determine whether the front vehicle is present in a range where a light blocking region can be formed. If the front vehicle is present in the range where a light blocking region can be formed, the irradiation controllers 228L and 228R form a split light distribution pattern that makes the front vehicle be included in the light blocking region. Further, the irradiation controllers 228L and 228R modify the light blocking region in accordance with the instruction from the vehicle controller 302 so that the light blocking region corresponds to the position of the moving front vehicle. If the front vehicle is out of the range where a light blocking region can be formed, the irradiation controllers 228L and 228R reduce the illuminance of at least one of the left-side high light distribution pattern Hi2L and the right-side high light distribution pattern Hi3R so that the front vehicle is not included in the upper irradiation region. It may be possible to improve driver's visibility in other regions, particularly, left and right shoulders of a road while preventing glare from being directed at the front vehicle by the above-mentioned control. Meanwhile, the "reduce" includes a case where a light distribution pattern is formed and the illuminance of the light distribution pattern is decreased so that glare is not directed at the front vehicle, and a case where the illuminance of the light distribution pattern is zero. A case where the illuminance of the light distribution pattern is zero includes a case where the irradiation controllers 228L and 228R switch a light distribution pattern to the basic low beam light distribution pattern Lo1.

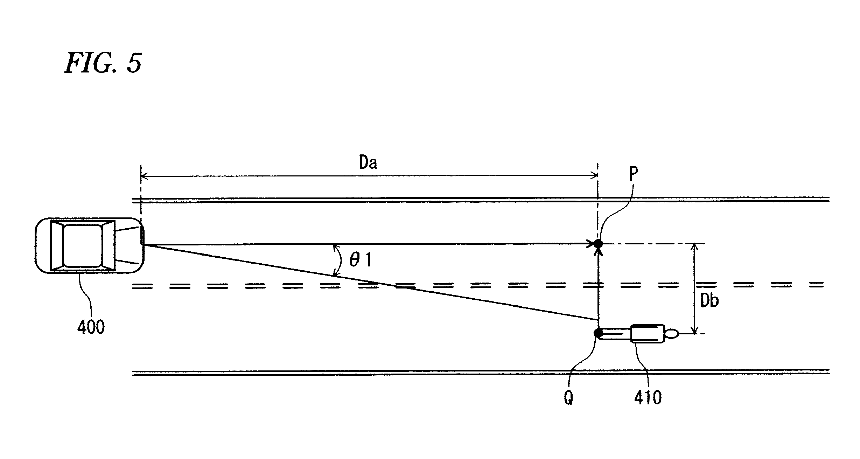

Subsequently, an example of the control of the formation of a light distribution pattern, which is performed by the vehicle lamp system 200 having the above-mentioned structure, will be described. Fig. 5 is a schematic view illustrating the control of the formation of a light distribution pattern that is performed by the vehicle lamp system according to the first embodiment. Meanwhile, Fig. 5 shows a case where the change angle $\theta_1$ of the optical axis O of the right-side high light distribution pattern Hi3 is to be limited while a pedestrian 410 is present on the opposite lane.

For example, when the above-mentioned split light distribution pattern is formed and at least one of the left-side high light distribution pattern Hi2 and the right-side high light distribution pattern Hi3 is moved to the outside in the vehicle width direction so as to correspond to the position of the moving front vehicle, a non-irradiation region expands in a middle region above the horizontal line H. For this reason, there is a concern that driver's visibility is reduced in the middle region. The middle region is a region where the improvement of visibility is required in order to avoid collision between a subject vehicle and a pedestrian intending to cross the road in front of the subject vehicle. In particular, as the speed of the subject vehicle is increased, the braking distance of the subject vehicle is increased. Accordingly, a pedestrian who intends to cross the road needs to be found early. Accordingly, as the speed of the subject vehicle is increased, the improvement of visibility is required in the middle region.

Specifically, a driver of a subject vehicle 400 finds a pedestrian 410 crossing the road as shown in Fig. 5 and suddenly puts on the brakes, so that the subject vehicle travels by a braking distance Da (stopping distance) and stops at a point P. In this case, in order to avoid collision between the subject vehicle 400 and the pedestrian 410, it is advantageous that the driver visually recognize the pedestrian 410 at a point Q deviated from the point P toward the shoulder of the road by a distance (moving distance Db) where the pedestrian 410 can reach the point P in a time (stop time) taken to stop the subject vehicle 400. Accordingly, it is advantageous that the point Q is illuminated by the upper irradiation region of the right-side high light distribution pattern Hi3. When the point Q is illuminated by the upper irradiation region, the driver can reliably visually recognize the pedestrian 410 present at the point Q. Accordingly, it may be possible to reliably avoid collision between the subject vehicle 400 and the pedestrian 410. Meanwhile, the moving direction of the pedestrian 410 crossing the road may be set to be perpendicular to the traveling direction of the subject vehicle 400.

Here, since the braking distance Da and the stop time are changed according to the speed of the subject vehicle 400, the moving distance Db of the pedestrian 410 is also changed according to the speed of the subject vehicle 400. Accordingly, it is advantageous that the moving distance of the light distribution pattern to be moved be also limited according to the speed of the subject vehicle 400. In the past, when the side high light distribution pattern was moved in the vehicle width direction, the lamp unit was moved up to the mechanical swivel limit thereof. In this case, since the above-mentioned point Q is included in the light blocking region of the split light distribution pattern, there was a possibility that it was not possible to meet the request to reliably find the pedestrian 410 present at the point Q.

In contrast, in the vehicle lamp system 200 according to this embodiment, each of the irradiation controllers 228L and 228R determines the upper limits of the moving ranges of the left-side high light distribution pattern Hi2 and the right-side high light distribution pattern Hi3 according to the speed of the subject vehicle based on the position information of the front vehicle when moving at least one of the left-side high light distribution pattern Hi2 and the right-side high light distribution pattern Hi3 in a direction where the upper irradiation region is moved to the outside in the vehicle width direction. Furthermore, in this embodiment, each of the irradiation controllers 228L and 228R changes the upper limits of the moving ranges of the light distribution patterns by deciding the upper limit of the change angle of the optical axis O. For example, as shown in Fig. 5, each of the irradiation controllers decides the upper limit of the change angle $\theta_1$ of the optical axis O so that the boundary C3 of the right-side high light distribution pattern Hi3 is not moved to the outside of the point Q in the vehicle width direction. As described above, it may be possible to more reliably avoid collision between the subject vehicle 400 and the pedestrian 410 who crosses the road in front of the subject vehicle, by limiting the moving ranges of the left-side high light distribution pattern Hi2 and the right-side high light distribution pattern Hi3 according to the speed of the subject vehicle.

The left-side high light distribution pattern Hi2 and the right-side high light distribution pattern Hi3 of this embodiment have the shape where the boundaries C2 and C3 are deviated from the vertical line V in the horizontal direction by 2° while the optical axis O is in the initial position (the change angle $\theta_1$ is 0°). Accordingly, for example, if deviation angles (rising angles) between the vertical line V and the boundaries C2 and C3 overlapping the point Q are 7°, the change angle $\theta_1$ of the optical axis O making the rising angle be 7° is 5°. The rising angles of the boundaries C2 and C3 can be calculated by ATAN (Db/Da).

Table 1 shows relationships among the speed, the stop time, the braking distance Da of the subject vehicle 400, the upper limits of the rising angles of the boundaries C2 and C3, and the upper limit of the change angle $\theta_1$ of the optical axis O. Meanwhile, the rising angle and the change angle $\theta_1$ were calculated when the moving speed of the pedestrian 410 was set to 0.9 m/s. This numerical value corresponds to the general walking speed of an aged person. Numerical values shown in Table 1 and the numerical value of the moving speed of the pedestrian 410 may be appropriately set based on experiments or simulations that are performed by a designer.

Table 1

| Vehicle speed (Km/h) | Stop time (sec.) | Braking distance Da (m) | Rising angle | Change angle $\theta_1$ |
|---|---|---|---|---|
| 40 | 3 | 21 | 7 | 5 |
| 60 | 4 | 41 | 5 | 3 |
| 80 | 5 | 67 | 4 | 2 |
| 100 | 6 | 100 | 3 | 1 |

From Table 1, it is found that the upper limit of the change angle θ1 of the optical axis O is reduced as the speed of the subject vehicle 400 is increased and the upper limit of the change angle $\theta_1$ of the optical axis O is increased as the speed of the subject vehicle 400 is reduced.

As described above, in the vehicle lamp system 200 according to this embodiment, each of the irradiation controllers 228L and 228R determines the upper limits of the moving ranges of the left-side high light distribution pattern Hi2 and the right-side high light distribution pattern Hi3 according to the speed of the subject vehicle based on the position information of the front vehicle when moving at least one of the left-side high light distribution pattern Hi2 and the right-side high light distribution pattern Hi3 in a direction where the upper irradiation region is moved to the outside in the vehicle width direction. Accordingly, the driver of the subject vehicle 400 finds the pedestrian 410 and starts braking control, and can more reliably avoid collision between the subject vehicle 400 and the pedestrian 410 when the subject vehicle 400 stops at the point P. That is, it may be possible to form a preferred light distribution pattern, which corresponds to the traveling state of the subject vehicle, when a light distribution pattern, which improves driver's visibility while preventing glare from being directed at the front vehicle, is to be formed. Accordingly, it may be possible to more reliably prevent glare from being directed at the front vehicle and to more reliably improve driver's visibility at the same time.

(Second embodiment)

A vehicle lamp system according to a second embodiment is a vehicle lamp system controlling the movement of a light distribution pattern in consideration of a response time, which is taken until the movement of the light distribution pattern is completed after a front vehicle is detected by a vehicle detecting device, when determining the moving distance of at least one of a right-side high light distribution pattern Hi3 and a left-side high light distribution pattern Hi2. This embodiment will be described below. Meanwhile, since the main structure of a vehicle lamp system 200, the shape of light distribution patterns that can be formed by the vehicle lamp system 200, and the like are the same as those of the first embodiment, the same components as those of the first embodiment are denoted by the same reference numerals. The description of the same components will be appropriately omitted and the same components will be appropriately omitted in the drawing.

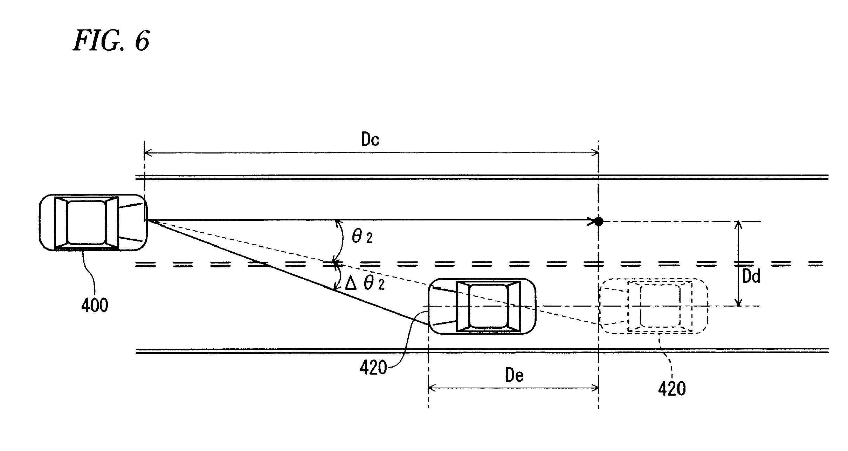

Fig. 6 is a schematic view illustrating the control of the formation of a light distribution pattern that is performed by a vehicle lamp system according to a second embodiment. Meanwhile, Fig. 6 shows a case where the change angle of an optical axis O of the right-side high light distribution pattern Hi3 is determined while a front vehicle 420 (an oncoming vehicle) is present.

When at least one of the left-side high light distribution pattern Hi2 and the right-side high light distribution pattern Hi3 is moved according to the position of the front vehicle, frame data of an image taken by the camera 306 are subjected to image processing in the image processor 308 and the results of recognition are provided to the vehicle controller 302. Further, the vehicle controller 302 recognizes the presence of a front vehicle, the information about the presence of the front vehicle is sent to the irradiation controllers 228L and 228R, and each of the irradiation controllers 228L and 228R moves a light distribution pattern by driving the motor 238 through the swivel controller 234. In this control, a time lag, which is caused by the time (response time $\Delta T$) taken for the calculation of the position of the front vehicle or the transmission/reception of a control signal, occurs until the lamp unit 10 actually swivels and the movement of the light distribution pattern is completed after a front vehicle is detected by the vehicle detecting device. The time lag may obstruct the accurate control of the movement of the light distribution pattern according to the position of the front vehicle.

Specifically, when the front vehicle 420 is present in front of the subject vehicle 400 so as to be distant from the subject vehicle by a distance Dc in the traveling direction (a position shown by a broken line) as shown in Fig. 6, an image of the front side of the subject vehicle is taken by the camera 306. In this case, the irradiation controllers 228L and 228R receive the information, which is based on the frame data of the image taken by the camera 306, from the vehicle controller 302 and calculate the change angle $\theta_2$ of the optical axis O of the right-side high light distribution pattern Hi3 corresponding to the detected front vehicle 420. Further, each of the irradiation controllers 228L and 228R controls the motor 238 through the swivel controller 234 so that the optical axis O of the right-side high light distribution pattern Hi3 is moved to the outside in the vehicle width direction by the change angle $\theta_2$. However, when the motor 238 is driven and the change of the angle of the optical axis O has been completed, the front vehicle 420 travels forward by a moving distance De corresponding to the above-mentioned response time $\Delta T$ (a position shown by a solid line). The moving distance De of the front vehicle 420 corresponding to the response time $\Delta T$ satisfies "De = $\Delta T \times V$" when a relative speed between the subject vehicle 400 and the front vehicle 420 is denoted by V. Accordingly, the moving distance of the right-side high light distribution pattern Hi3 has a lack of a delay angle $\Delta\theta_2$ corresponding to the moving distance De. As a result, there is a concern that the right-side high light distribution pattern Hi3, which is moved by the change angle $\theta_2$ so as to correspond to the position of the front vehicle 420 of which the image is taken by the camera 306, directs glare at the front vehicle 420.

Accordingly, in the vehicle lamp system 200 according to this embodiment, the irradiation controllers 228L and 228R determine the moving distances of the light distribution patterns, which are to be moved, using the information about the response time that is taken until the movement of at least one of the right-side high light distribution pattern Hi3 and the left-side high light distribution pattern Hi2 is completed after the front vehicle 420 is detected by the vehicle detecting device. That is, the light distribution pattern is moved by the sum of the delay angle $\Delta\theta_2$ and the change angle $\theta_2$ of the optical axis O. Since the moving distances of the light distribution patterns, which are to be moved, are determined based on the information about the response time as described above, it may be possible to remove the lack, which corresponds to the delay angle $\Delta\theta_2$ caused by the above-mentioned response time $\Delta T$, of the moving distance of the light distribution pattern. Therefore, it may be possible to more reliably avoid glare that is directed at the front vehicle 420.

Further, each of the irradiation controllers 228L and 228R may determine the moving distance ($\theta_2+\Delta\theta_2$) of a light distribution pattern by using a distance Dd in the vehicle width direction (the information about a distance in the vehicle width direction) between the subject vehicle 400 and the front vehicle 420, a distance Dc in the traveling direction (information about a distance in the traveling direction) between the subject vehicle 400 and the front vehicle 420, and the relative speed V (information about the relative speed) between the subject vehicle 400 and the front vehicle 420, in addition to the response time $\Delta T$. In this embodiment, each of the irradiation controllers 228L and 228R calculates the moving distance ($\theta_2+\Delta\theta_2$) of a light distribution pattern by using the response time $\Delta T$, the distance Dd in the vehicle width direction, the distance Dc in the traveling direction, and the relative speed V.

Specifically, the change angle $\theta_2$ can be calculated based on the following expression (1).

$$\theta_2 = \mathrm{ATAN}(\frac{\mathrm{Dd}}{\mathrm{Dc}}) \qquad \ldots (1)$$

Furthermore, the delay angle $\Delta\theta_2$ can be calculated based on the following expression (2).

$$\Delta\theta_2 = \mathrm{ATAN}(\frac{\mathrm{Dd}}{\mathrm{Dc} - \Delta T \times V}) - \mathrm{ATAN}(\frac{\mathrm{Dd}}{\mathrm{Dc}}) \qquad \ldots (2)$$

Accordingly, the moving distance ($\theta_2+\Delta\theta_2$) of a light distribution pattern can be calculated based on the following expression (3).

$$\theta_2 + \Delta\theta_2 = \mathrm{ATAN}(\frac{\mathrm{Dd}}{\mathrm{Dc} - \Delta T \times V}) \qquad \ldots (3)$$

Here, the distance Dd in the vehicle width direction between the subject vehicle 400 and the front vehicle 420 can be estimated based on at least one of the speed of the subject vehicle 400 and the type of the traveling road. The speed of the subject vehicle 400 can be obtained from the vehicle speed sensor 312, and the type of the traveling road can be obtained from the navigation system 314. Since the speed of the subject vehicle 400 or the type of the traveling road and the distance Dd in the vehicle width direction have a certain level of correlation, it may be possible to estimate the distance Dd in the vehicle width direction based on these kinds of information. Accordingly, it may be possible to reduce the calculation loads of the irradiation controllers 228L and 228R. Meanwhile, the speed of the subject vehicle 400, when the distance Dd in the vehicle width direction is estimated, may be average speed at a predetermined time. Further, it may be possible to previously set the response time ΔT by measuring the calculation time of the irradiation controllers 228L and 228R or the vehicle controller 302, the driving time of the motor 238, the time of communication between the respective parts, and the like, Furthermore, the distance Dc in the traveling direction and the relative speed V can be obtained by a general method, which is well known in the related art, such as a method that uses a distance between a pair of headlight units of the front vehicle 420.

As described above, in the vehicle lamp system 200 according to this embodiment, the irradiation controllers 228L and 228R determine the moving distances of light distribution patterns using the response time ΔT that is taken until the movement of the light distribution patterns is completed after the front vehicle 420 is determined by the vehicle detecting device. Accordingly, when there is performed the control that improves the driver's visibility while preventing glare from being directed at the front vehicle by making at least one of the left-side high light distribution pattern Hi2 and the right-side high light distribution pattern Hi3 follow the front vehicle 420, it may be possible to more accurately make the light distribution patterns follow the front vehicle 420. For this reason, it may be possible to more reliably prevent glare from being directed at the front vehicle and to more reliably improve the driver's visibility at the same time.

The exemplary embodiments of the invention are not limited to the above-mentioned embodiments. The respective embodiments may be combined with each other, or modifications such as various kinds of design changes may be made based on the knowledge of those skilled in the art. Accordingly, embodiments to which the combination or the modifications are applied are also included in the scope of the invention. New embodiments, which are formed by the combination of the above-mentioned embodiments and the combination of each of the above-mentioned embodiments and the following modifications, have the advantages of the embodiments and modifications to be combined.

In each of the above-mentioned embodiments, the control of each embodiment has been performed when a split light distribution pattern is to be formed. However, the above-mentioned control may be performed when the headlight units 210L and 210R form a left-side high light distribution pattern Hi2 and a right-side high light distribution pattern Hi3 together.

In each of the above-mentioned embodiments, the determination of the traveling state of the subject vehicle or the presence of the front vehicle may be performed by any one of the vehicle controller 302 and the irradiation controller 228. Further, when the irradiation controller 228 performs the determination of the traveling state of the subject vehicle or the presence of the front vehicle, the information provided from various sensors or the navigation system is sent to the irradiation controller 228 through the vehicle controller 302. Furthermore, when the irradiation controller 228 determines the traveling state of the subject vehicle or the presence of the front vehicle, one or both of the irradiation controllers 228L and 228R may determine the traveling state of the subject vehicle or the presence of the front vehicle. Moreover, in each of the above-mentioned embodiments, the irradiation controllers 228L and 228R have determined light distribution patterns. However, the vehicle controller 302 may determine the light distribution patterns. In this case, the irradiation controllers 228L and 228R control the turning-on/off of the bulbs 14, the driving of the swivel actuator 222 and the motor 238 in accordance with the instruction from the vehicle controller 302.

## Claims

1. A lamp system for a vehile (400), comprising:

a vehicle lamp (210) configured to form a first light distribution pattern (Hi2, Hi3) and move the first light distribution pattern in a vehicle width direction, wherein the first light distribution pattern is formed by combining:

a low beam light distribution pattern having a cutoff line; and
a certain light distribution pattern formed above the cutoff line;

a vehicle sensor (306, 308, 302) configured to detect a front vehicle (420) and acquire position information of the front vehicle; and
a controller (302) configured to move the certain light distribution pattern in the vehicle width direction such that the certain light distribution pattern moves away from the front vehicle (420), based on the position information, wherein the controller is configured to determine the upper limit of a moving range of the certain light distribution pattern, based on a speed of the vehicle (400).

2. The system according to claim 1,
wherein the vehicle lamp is configured to change an angle of an optical axis of the vehicle lamp in the vehicle width direction, and
wherein the controller is configured to determine the upper limit of a change angle of the optical axis.

3. The system according to claim 1,
wherein the controller is configured to determine a moving distance of the first light distribution pattern based on a response time ($\Delta T$), which is required for the controller to complete movement of the certain light distribution pattern after the vehicle sensor detects the front vehicle.

4. The system according to claim 3,
wherein the controller is configured to determine the moving distance of the certain light distribution pattern based on at least one of:

a relative speed (V) between the vehicle (400) and the front vehicle (420);
a distance (Dc) in a vehicle traveling direction between the vehicle (400) and the front vehicle (420); and
a distance (Dd) in the vehicle width direction between the vehicle (400) and the front vehicle (420), wherein the distance (Dd) is estimated based on at least one of the speed of the vehicle and the type of a vehicle traveling road.

5. A controller (302) for a vehicle lamp (210) configured to form a first light distribution pattern (Hi2, Hi3) and move the first light distribution pattern in a vehicle width direction, wherein the first light distribution pattern is formed by combining: a low beam light distribution pattern having a cutoff line; and a certain light distribution pattern formed above the cutoff line,
whererein the controller is configured to move the certain light distribution pattern in the vehicle width direction such that the certain light distribution pattern moves away from a front vehicle (420), based on position information of the front vehicle.

6. A vehicle lamp (210) configured to form a first light distribution pattern (Hi2, Hi3) and move the first light distribution pattern in a vehicle width direction,
wherein the first light distribution pattern is formed by combining:

a low beam light distribution pattern having a cutoff line; and
a certain light distribution pattern formed above the cutoff line,

wherein the certain light distribution pattern is moved in the vehicle width direction such that the certain light distribution pattern moves away from a front vehicle (420).

FIG. 1

## FIG. 2

## FIG. 3

*FIG. 4A*

Lo1

*FIG. 4D*

C2

Hi2

*FIG. 4B*

Lo2

*FIG. 4E*

C3

Hi3

*FIG. 4C*

Hi1

*FIG. 4F*

Lo3

EP 2 388 163 A2

*FIG. 5*

FIG. 6

**REFERENCES CITED IN THE DESCRIPTION**

**Patent documents cited in the description**

- JP 2010000957 A
- EP 2135774 A